(19) Europäisches Patentamt
European Patent Office
Office européen des brevets

(11) **EP 2 593 760 B1**

(12) **EUROPÄISCHE PATENTSCHRIFT**

(45) Veröffentlichungstag und Bekanntmachung des Hinweises auf die Patenterteilung:
**26.03.2014 Patentblatt 2014/13**

(21) Anmeldenummer: **11782364.1**

(22) Anmeldetag: **09.07.2011**

(51) Int Cl.:
**G01J 5/38** (2006.01)     **G01J 5/42** (2006.01)

(86) Internationale Anmeldenummer:
**PCT/DE2011/001419**

(87) Internationale Veröffentlichungsnummer:
**WO 2012/010147 (26.01.2012 Gazette 2012/04)**

(54) **INFRAROT-SENSOR MIT TUNNELKONTAKT ZUR MESSUNG DER VERFORMUNG EINER MEMBRAN**

INFRARED SENSOR HAVING TUNNEL CONTACT FOR MEASURING THE DEFORMATION OF A MEMBRANE

CAPTEUR INFRAROUGE COMPRENANT UNE JONCTION A EFFET TUNNEL POUR MESURER LA DÉFORMATION D'UNE MEMBRANE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.07.2010 DE 102010027346**

(43) Veröffentlichungstag der Anmeldung:
**22.05.2013 Patentblatt 2013/21**

(73) Patentinhaber: **Forschungszentrum Jülich GmbH
52425 Jülich (DE)**

(72) Erfinder:
• **BOUSACK, Herbert
52080 Aachen (DE)**
• **SOLTNER, Helmut
52459 Inden (DE)**
• **MAYER, Dirk
50226 Frechen (DE)**
• **BANZET, Marko
52511 Geilenkirchen (DE)**

(56) Entgegenhaltungen:
**EP-A1- 2 060 891**

• **KENNY T W ET AL: "MICROMACHINED INFRARED SENSORS USING TUNNELING DISPLACEMENT TRANSDUCERS", REVIEW OF SCIENTIFIC INSTRUMENTS, AIP, MELVILLE, NY, US, Bd. 67, Nr. 1, 1. Januar 1996 (1996-01-01), Seiten 112-128, XP000554511, ISSN: 0034-6748, DOI: 10.1063/1.1146559 in der Anmeldung erwähnt**

# EP 2 593 760 B1

**Beschreibung**

Die Erfindung betrifft eine Sensorsanordnung.

Aus DE 10 2008 018 504 ist eine Sensoranordnung mit einer verformbaren Membran in der Wand einer mit Fluid befüllten Messkammer bekannt. Die auf Grund von Wärmeeinstrahlung erfolgte Ausdehnung des Fluids überträgt sich auf die Membran. Die Auslese der Verformung der Membran erfolgt kapazitiv über einen Kondensator auf der dem Fluid gegenüberliegenden Seite der Membran. Der Infrarot-Sensor ist nachteilig vergleichsweise unempfindlich.

Aus Kenney (Kenny, TW (1996): Micromachined Infrared Sensors Using Tunneling Displacement Transducers. Rev. Sci. Instrum. 67(1), p. 112-128) ist eine weitere Sensoranordnung nach dem Oberbegriff des Patentanspruchs 1 bekannt. Die Sensoranordnung ist ebenfalls als Infrarotsensor ausgelegt. Die Auslese eines Signals ist über einen Tunnelkontakt gewährleistet. Nachteilig ist der Aufbau der Anordnung kompliziert. Große Auslenkungen der Membran können zu einer Zerstörung des Tunnelkontakts führen, so dass keine Messung der Wärmestrahlung möglich ist.

Ein weiterer Sensor ist aus EP 2060891 bekannt.

Aufgabe der Erfindung ist, es eine robuste und gleichzeitig hochempfindliche Sensoranordnung zur Messung der Verformung einer kraftbeaufschlagten Fläche bereit zu stellen.

Die Aufgabe wird gelöst nach Patentanspruch 1. Vorteilhafte Ausgestaltungen hierzu ergeben sich aus den hierauf rückbezogenen Patentansprüchen.

Die Sensoranordnung zur Messung der durch eine Kraft hervorgerufenen Verformung einer Fläche ist dadurch gekennzeichnet, dass auf der verformbaren Fläche ein erster Streifen S 1 und ein zweiter Streifen S2 planar, das heißt in derselben Ebene zur Ausbildung eines Tunnelkontaktes, angeordnet sind. Mindestens ein erster Streifen weist einen auf der verformbaren Fläche unbefestigten Abschnitt auf. Dieser Abschnitt ist beweglich und stellt einen Zeiger dar. Die durch eine Krafteinwirkung oder eine Druckeinwirkung bewirkte Verformung der Fläche überträgt sich auf den beweglichen, das heißt an der Fläche unbefestigten Abschnitt des ersten Streifens, so dass der Abstand d1 im Bereich des Tunnelkontakts der beiden Streifen S1 und S2 zueinander auf Grund der geometrischen Verhältnisse vergrößert wird. Die durch die Krafteinwirkung hervorgerufene Änderung des Abstands und Tunnelstroms wird direkt als Maß für die Verformung der Fläche gemessen (ungeregelter Betrieb). Alternativ kann eine Feed-Back-Regelung eingesetzt werden, bei der eine elektronische Schaltung ein Rückstell-Element, z. B. einen elektrostatischen Aktuator, ansteuert und so der Kontaktabstand bzw. der Tunnelstrom konstant gehalten wird. Bei dieser Variante wird das Rückstellsignal der Feed-Back-Regelung als Maß für die Verformung registriert (geregelter Betrieb).

Die Bewegung des beweglichen Abschnitts des ersten Streifens erfolgt grundsätzlich aus der Ebene der beiden Streifen heraus.

Vorzugsweise weist die Sensoranordnung einen ersten Streifen S1 auf, der länger ist als der zweite Streifen S2. Dies bewirkt vorteilhaft eine hohe Übersetzung der durch die Krafteinwirkung verursachten Verformung der Fläche auf die Auslenkung des beweglichen Abschnitts des ersten Streifens aus seiner Ruhelage hinaus, so dass auf Grund der geometrischen Verhältnisse auch kleinste Verformungen der Fläche zu sehr großen Änderungen des Abstands d1 des ersten Streifens zum zweiten Streifen im Tunnelkontakt führen. Dadurch wird vorteilhaft bewirkt, dass die Sensoranordnung hochsensitiv auf Verformungen der Fläche reagiert.

Der Ort der Krafteinwirkung und Verformung der Fläche kann direkt unterhalb der beiden Streifen S1 und S2 und damit unmittelbar im Bereich des Tunnelkontakts geschehen. Da beide Streifen auf der Oberfläche der Fläche in derselben Ebene angeordnet sind, schlägt die Verformung der Fläche durch Krafteinwirkung an diesem Ort unmittelbar auf den Abstand d1 der beiden Streifen im Tunnelkontakt durch. Der erste Streifen wird dann mit seinem beweglichen Abschnitt aus der Ruhelage angehoben und spreizt sich tangential von der Fläche ab.

Der bewegliche, unbefestigte Abschnitt des ersten Streifens beginnt vorzugsweise im Bereich des Wendepunkts W der Biegelinie der Fläche. Dadurch wird vorteilhaft bewirkt, dass sich der erste Streifen als Zeiger löst und von der verformten Fläche tangential abspreizt, wobei der Spreizwinkel alpha des Zeigers zur Waagerechten, das heißt zum nicht verformten Zustand der Fläche, den größten Winkel einnimmt.

Für den Fall einer kreisförmigen, an ihrem Rand fest eingespannten Membran mit dem Radius R befinden sich die Orte mit dem größten Winkel alpha gegenüber der Waggerechten auf einem Kreis mit dem Radius $R/\sqrt{3}$ (Gleichung 1) um den Mittelpunkt der Membran. Die maximale Übersetzung als Verhältnis des Kontaktabstands zu der maximalen Durchbiegung der Membran in der Mitte beträgt dann etwa 2,9.

Diese Art der Anregung unterhalb des Tunnelkontakts der Sensoranordnung ist nicht zwingend. Vielmehr ist eine Auslenkung des beweglichen Teils des ersten Streifens S1 auch dann möglich, wenn eine Verformung der Fläche durch Krafteinwirkung außerhalb des Bereichs des Tunnelkontakts, also nicht direkt unmittelbar unter den beiden Streifen S 1 und S2 erfolgt.

Mit der erfindungsgemäßen Sensoranordnung kann, wie in der DE 10 2008 018 504 beschrieben, ein Infrarotsensor aufgebaut werden, der im Vergleich zu diesem durch das empfindlichere Ausleseverfahren wesentlich kleinere Verformungen der Membran detektieren kann und damit hochsensitiv ist. Im Rahmen der Erfindung wurde erkannt, dass im Vergleich zum Stand der Technik aus Kenney (siehe oben) zudem eine robuste Sensoranordnung bereit gestellt wird, da die Streifen für den Tunnelkontakt in einer Ebene auf der Oberfläche der verformbaren Fläche liegen, so dass die Verformung der Fläche immer zu einer Vergrößerung des Abstands d1 im Tunnelkontakt führt und somit ein Zusammenstoßen der Kontakte ausgeschlossen ist.

Auf Basis der Sensoranordnung werden besonders vorteilhaft Infrarotsensoren und Verformungssensoren wie bei Dehnmessstreifen als Sensorklassen bereit gestellt.

Die Streifen können durch die im Stand der Technik bekannte Mehrlagentechnologie hergestellt werden. Die Streifen sind jeweils mit einem ihrer Enden auf der Oberfläche der verformbaren Fläche befestigt. Der zweite Streifen S2 kann zudem vorteilhaft auch vollständig auf der Oberfläche der verformbaren Fläche befestigt sein.

Der längere erste Streifen S1 weist einen an der verformbaren Fläche unbefestigten Abschnitt mit einer freien Länge L2 und einen an der Fläche befestigten Abschnitt mit der Länge L1 auf. Bei einer kreisförmigen, an ihrem Rand eingespannten Membran mit dem Radius R kann die Länge L2 vorzugsweise $R*(1+1/\sqrt{3})$ (Gleichung 2) und die Länge L1 vorzugsweise $R*(1-1/\sqrt{3})$ (Gleichung 3) betragen. Die freie Länge L2 wird absolut betrachtet möglichst lang ausgestaltet. Dies geschieht durch die Verkürzung der Länge des zweiten Streifens S2 und/ oder durch ein großes Verhältnis aus L2:L1 im ersten Streifen S1.

Der bewegliche Abschnitt des ersten Streifens beginnt vorzugsweise im Bereich des Wendepunkts W der Biegelinie der Fläche. Dadurch wird vorteilhaft bewirkt, dass sich der erste Streifen S1 als Zeiger löst und von der verformten Fläche tangential abspreizt, wobei der Spreizwinkel alpha des Zeigers zur Waagerechten, das heißt zum nicht verformten Zustand der Fläche, maximal wird.

Dadurch wird vorteilhaft eine ausgeprägte Beweglichkeit und eine besonders große Übersetzung der auf Grund der Verformung eintretenden Abstandsänderung d1 nach d2 im Tunnelkontakt bewirkt. Eine hochsensitive Sensoranordnung wird so bereit gestellt.

Der erste oder beide Streifen sind aus einem Material mit einem möglichst hohen E-Modul bereit gestellt. Iridium weist z. B. ein E-Modul von 528 GPa auf. Dadurch wird vorteilhaft eine hohe Steifigkeit als Produkt aus E-Modul und axialem Flächenträgheitsmoment des ersten Streifens S1 hervorgerufen, die sich unmittelbar auf die Robustheit der Sensoranordnung durchschlägt.

Die Streifen bestehen vorzugsweise aus hartem, chemisch inertem Material, wie Iridium, Tantal, Palladium, Wolfram bzw. Legierung dieser Metalle mit chemisch inerten Metallen, wie z. B. Platin/Iridium verschiedener Mischungsverhältnisse, aber auch keramische Werkstoffe, wie Silizium oder Silizium-Carbid, wenn diese Werkstoffe im Kontaktbereich metallisiert werden können oder durch Dotierung metallische Eigenschaften erhalten und ohmsche Kontaktwiderstände ausbilden.

Das axiale Flächenträgheitsmoment des ersten Streifens S1 wäre optimal gewählt, wenn die Breite des Streifens identisch zur Dicke des Streifens ist. Dann ist die Steifigkeit in beiden Hauptachsenrichtungen gleich. Aus Herstellungsgründen ist die Breite des Streifens etwa 10 bis 100 mal so groß wie die Dicke des Streifens. Dies sorgt dafür, dass das Eigengewicht des Streifens zu einer vernachlässigbaren Durchbiegung des Streifens führt.

Die Resonanzfrequenz $f_R$ des ersten Streifens S1 soll größer als 1 kHz sein, z. B. einige kHz bis MHz, damit umgebungsinduzierte Schwingungen den ersten Streifen S1 nicht selbst zu Schwingungen anregen und damit ein hohes Signalrauschen verursachen.

Die kleinste Resonanzfrequenz bei einem ersten Streifen mit rechteckigem Querschnitt ergibt sich aus:

$$f_R = 0,56 \cdot \sqrt{\frac{E \cdot I}{m_L \cdot l^4}} \qquad \text{(Gleichung 4)}$$

mit Masse je Längeneinheit des ersten Streifens S1 $m_L$ und der Streifenlänge l. Bei einer vorgegebenen Länge l und einer gewünschten hohen Resonanzfrequenz ergeben sich hier je nach Materialwahl Vorgaben für die Wahl der Geometrie des ersten Streifens S1. Bei einem Kontaktarm aus Iridium mit einer Breite b = 50 $\mu$m, einer Höhe h = 1 $\mu$m und einer Länge l = 0,355 mm ergibt sich so die niedrigste Resonanzfrequenz zu f = 6,2 kHz.

Die Gesamtlänge des ersten Streifens S1 kann bei einer kreisförmigen Membran mit dem Radius R bis zu $R*(1+1/\sqrt{3})$ (Gleichung 5) betragen.

Vorzugsweise weisen also die Streifen S1 und S2 Längen und Materialien auf, die sich nach den angegebenen Gleichungen bemessen lassen.

In einer Ausgestaltung der Erfindung ist die verformbare Fläche Bestandteil einer mit einem Fluid gefüllten Messkammer. Dadurch wird auf einfache Weise eine Sensoranordnung aufgrund der Ausdehnung des Fluids z. B. in Folge von einfallender Wärmestrahlung bereit gestellt.

Ein Teil der Wand der Messkammer ist dann als flexible Membran zur Ausbildung der Fläche M ausgebildet. Eine Ausdehnung des Fluids verursacht eine Verformung der Membran. Die auf der der Messkammer gegenüberliegenden Seite der Membran angeordneten Streifen bilden die Messeinrichtung zum Nachweis der Verformung der Membran. Da mindestens der erste Streifen beweglich ist, wird der Abstand d1 der Streifen S 1 und S2 im Bereich des Tunnelkontakts vergrößert.

Besonders vorteilhaft weist die Sensoranordnung ein für elektromagnetische Strahlung transparentes Fenster in der Wand der Messkammer auf. Auf diese Weise wird vorteilhaft bewirkt, dass ein hochsensitiver und gleichzeitig sehr robuster Infrarotsensor bereit gestellt werden kann.

Es ist denkbar, mehr als zwei Streifen in derselben Ebene auf der Oberfläche der verformbaren Fläche anzuordnen. Die Verdopplung der Anzahl der Streifen führt zur Verdopplung der Tunnelkontakte. Es sind dann je zwei Streifen zur Ausbildung eines Tunnelkontakts einander zugeordnet. Auf diese Weise wird vorteilhaft bewirkt, dass je nach Lage der Streifenpaare und Ausbildung der Tunnelkontakte auf der Fläche der wirksame Bereich, in dem Messungen zur Verformung der Fläche durchgeführt werden können, vergrößert wird.

Die Sensoranordnung mit dem oder den Tunnelkontakt(en) kann grundsätzlich mit zwei unterschiedlichen Verfahren betrieben werden: In einem geregelten Betrieb mit einem fest eingestellten Kontaktabstand, der durch eine Feed-Back-Regelung sichergestellt wird oder ohne eine Feed-Back-Regelung mit freiem veränderlichen Kontaktabstand.

Kontakte mit veränderlichem Abstand: Hierbei ergibt sich der Kontaktabstand aus der Auslenkung des Kontaktarms als erstem Streifen. In Abhängigkeit vom Kontaktabstand d1 ergibt sich ein variabler Tunnelstrom als Messgröße. Diese Betriebsweise ist bekannt aus der Technologie der Bruchkontakte (englisch: Break Junctions). Vorteilhaft ist, dass keine zusätzliche Regelung erforderlich ist. Zudem ist die Herstellung einfach.

Kontakte mit konstantem Abstand: Hierbei wird eine Feed-Back-Regelung eingesetzt, wobei immer ein konstanter Tunnelstrom bei einem festen Kontaktabstand der Streifen S1 und S2 sichergestellt wird. Diese Betriebsweise ist, wie die erste Betriebsweise, Stand der Technik in der Rastertunnelmikroskopie.

Bei einem Tunnelmikroskop wird der Kontaktabstand ebenfalls geregelt. Prinzipiell ist ein Betrieb mit konstantem Tunnelstrom oder einem konstanten Abstand zwischen Tunnelspitze und Probe möglich. Als Aktuator dient z. B. ein Piezo-Element, das die Rückstellung der Tunnelspitze bewirkt. Diese Technologie ist Stand der Technik.

Eine weitere Anwendung dieser Kontakte könnte die Messung von geringsten Verformungen bei mechanischen Bauteilen sein, wenn man z. B. einen Teil eines Silizium-Wafers, auf dem die Kontakte hergestellt wurden, ähnlich wie bei Dehnmessstreifen auf das zu messende Bauteil aufklebt.

Die Form des ersten und zweiten Streifens ist nicht zwingend rechteckig und muss auch keinen über der Länge konstanten Querschnitt aufweisen. Der Streifen kann zur Erhöhung der Resonanzfrequenz z. B. als Dreieck ausgeführt werden.

Im Weiteren wird die Erfindung an Hand von Ausführungsbeispielen und der beigefügten neun Figuren näher erläutert, ohne dass es hierdurch zu einer Beschränkung der Erfindung kommen soll.

Es zeigen:

Figur 1: Prinzip der Sensoranordnung aus Fläche M und Streifen S 1 und S2.

Figur 2: Ausführungsbeispiel zur Sensoranordnung mit einem Tunnelkontakt T1.

Figur 3: Infrarotsensor mit Messkammer 1 und transparentem Fenster 2.

Figur 4: Herstellungsverfahren, Bruchkontakt (F=Kraft).

Figur 5: Feed-Back-Regelung mittels Piezoelement P.

Figur 6: Feed-Back-Regelung mittels Piezoelementstapel PS.

Figur 7: Feed-Back-Regelung mittels elektrostatischen Aktuatoren.

Figur 8: Feed-Back-Regelung mittels Aktuator und Ausgleichskammer.

Figur 9: Ausführungsbeispiel zur Sensoranordnung mit drei Tunnelkontakten T1-T3.

Figur 10: Herstellungsverfahren.

Identische Bezugszeichen in den Figuren bedeuten: 1 = Messkammer; 2=transparentes Fenster; W=Wendepunkt der Biegelinie der Fläche bzw. Membran M.

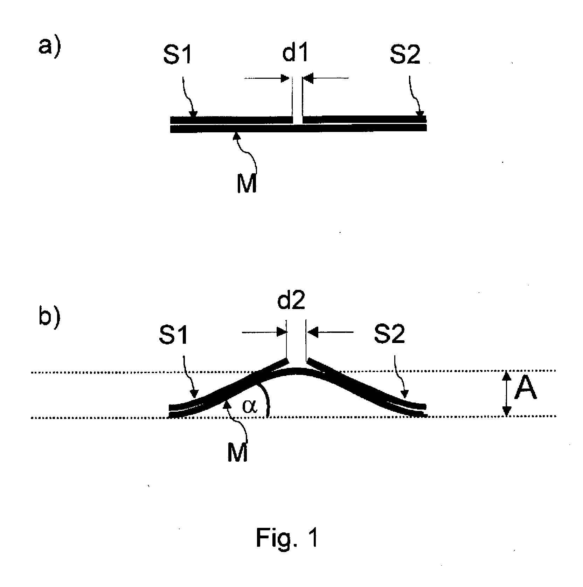

Figur 1 zeigt im Schnitt grobschematisch das Prinzip der Sensoranordnung. Die beiden Streifen S 1 und S2 liegen beide in derselben Ebene auf der Oberfläche der sich verformenden Membran M als Fläche. Durch die planare, offene Anordnung der Streifen S 1 und S2 wird die Herstellung wesentlich vereinfacht. Zudem wird der Nachteil einer Kollision der Streifen S 1 und S2 bei einer Überlastung wie im Stand der Technik nach Kenney vermieden, da durch die Anordnung der Abstand d1 im Tunnelkontakt, anders als bei Kenney, nur vergrößert werden kann.

Nach Fig.1 werden auf der Membran M elektrisch kontaktierbare Streifenkontakte S 1 und S2 aus einem mechanisch harten Material, z. B. Iridium, durch Aufdampfen und Strukturieren auf die Membran M aufgebracht. Bei einer Durchbiegung der Membran M um die maximale Größe A werden die Streifen S 1 und S2 aus der Ruhelage angehoben und der Abstand d1 vergrößert sich zu d2. Bei der gezeigten Ausgestaltung ist die Geometrie schon besser als nach dem Stand der Technik, da keine Kollision der Streifen S1 und S2 erfolgen kann. Diese Sensoranordnung ist andererseits aber noch nicht hochsensitiv im Sinne der Erfindung, da die Öffnung des Tunnelkontakts d2 kleiner ist als die zu messende Durchbiegung A ist (Untersetzung).

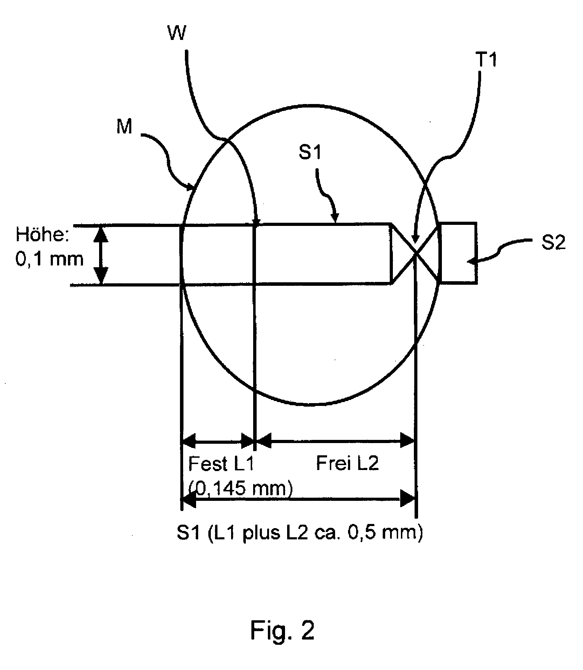

Durch eine geeignete Geometrie kann man jedoch eine Übersetzung erreichen, wie in der Aufsicht der Figur 2 gezeigt. Dabei wird der erste Streifenkontakt S1 bis zum Membranrand im Bild nach rechts verlängert und der andere Streifenkontakt S2 entsprechend verkürzt. Die Spitzen beider Streifen liegen im Tunnelkontakt. Die freie Länge L2 des langen ersten Streifens S1, das heißt die Strecke, die nicht mit der Membran M verbunden sondern beweglich ist, wird so möglichst lang ausgestaltet.

Der bewegliche Abschnitt mit der freien Länge L2 beginnt im Wendepunkt W der Biegelinie der Membran M. Durch diese Konfiguration spreizt sich der lange Streifen S1 tangential von der durch Krafteinwirkung verursachten Verformung der Membran M ab. Damit kann man ohne weiteres eine dreifache Übersetzung der zu messenden Durchbiegung erreichen, das heißt die Durchbiegung A wird mit dreifacher Übersetzung d2/A =3, vergleiche Figur 1, gemessen.

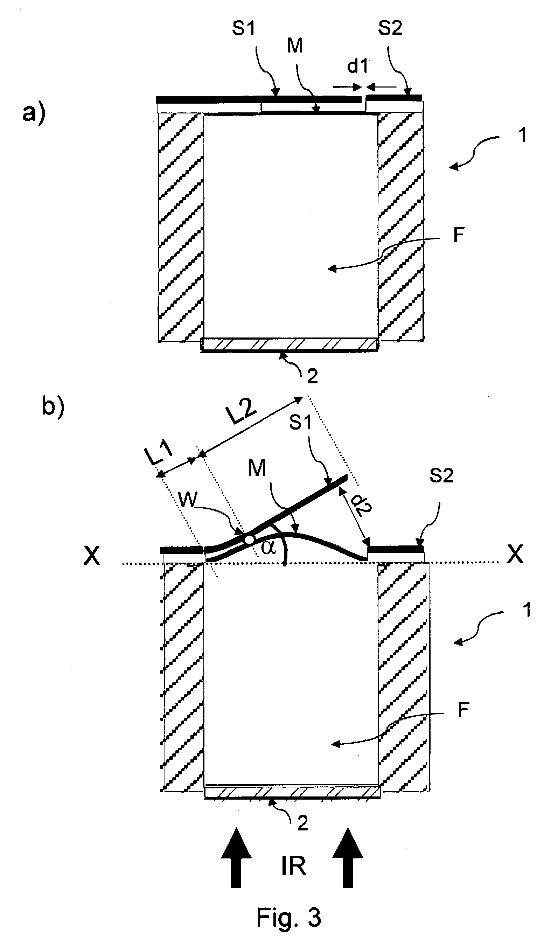

Figur 3 zeigt schematisch im Schnitt die Integration dieser Sensoranordnung nach Figur 2 in einen Infrarotsensor. Die Messkammer 1 ohne die Sensoranordnung ist grundsätzlich wie in DE 10 2008 018 504 gezeigt aufgebaut. Sie wurde nach dem dort angegebenen Schema hergestellt und besteht im Übrigen aus identischen Materialien. Bezüglich der Herstellung und der Materialien als solches wird auf den Inhalt der DE 10 2008 018 504 verwiesen.

Das Fluid F in der Messkammer 1 dehnt sich nach dem Eintritt der Wärmestrahlung über das Fenster 2 in der Kammer 1 aus. Die Druckänderung schlägt auf die Membran M durch, die sich im Bild nach oben verformt. Da der lange erste Streifen S1 mit seiner freien Länge L2 genau im Wendepunkt W der Biegelinie der Membran M beginnt, ist eine tangentiale Abspreizung des ersten Streifens S1 von der Membran M möglich, so dass der Abstand d1 (Figur 3a) sich auf d2 vergrößert (Figur 3b). Dadurch wird vorteilhaft bewirkt, dass sich der erste Streifen als Zeiger löst und von der verformten Fläche tangential abspreizt, wobei der Spreizwinkel alpha des Zeigers zur Waagerechten (dargestellt durch X-X), das heißt zum nicht verformten Zustand der Fläche, möglichst groß wird.

Andererseits ist das Prinzip, wie in Figur 2 gezeigt, selbstverständlich auch auf andere Konfigurationen und Sensoranordnungen übertragbar, z. B. auf Dehnmessstreifen.

Herstellung des Tunnelkontakts:

Je nach Betriebsweise ergibt sich eine unterschiedliche Gestaltung des Tunnelkontaktes. Grundsätzlich können alle vorgeschlagenen Ausführungen in Mehrlagentechnologie ausgeführt werden, die dem Fachmann aus dem Stand der Technik bekannt sind.

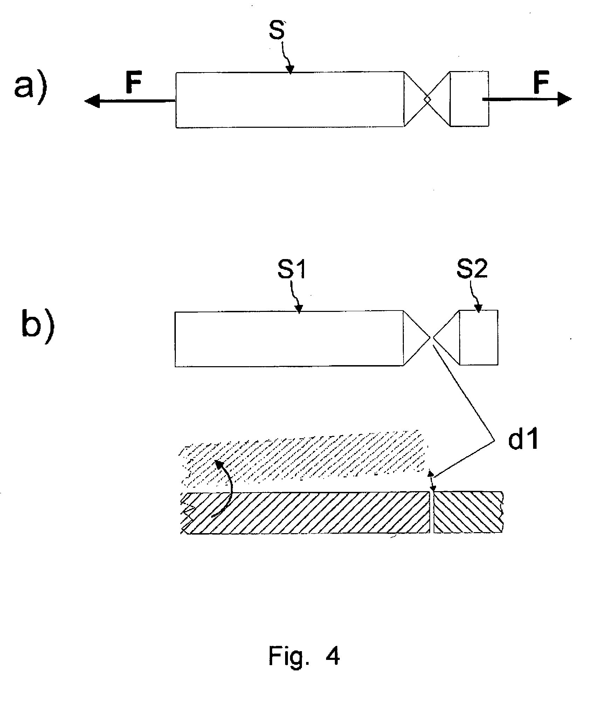

Zur Herstellung des Tunnelkontakts ist es wichtig, die verbleibende Verbindungsstelle, siehe Figur 4a, möglichst dünn auszuführen. Die eigentliche Herstellung des Tunnelkontakts erfolgt wie bei Bruchkontakten durch Brechen der Verbindungsstelle. Um die Kraft F auf diese Verbindungsstelle aufzubringen, wird eine Messkammer 1, wie in Figur 3b gezeigt, mit einem Druck beaufschlagt, sodass sich die Membran verformt und durch die Dehnung der Membran M die Verbindungsstelle der Kontakte zur Bildung der Streifen S 1 und S2 aufreißt. Der dazu nötige Druck kann für jeden Sensor leicht variieren und muss experimentell durch graduelles Erhöhen des Druckes ermittelt werden. Eine Kontrolle über einen erfolgten Bruch kann über eine Widerstandsmessung über die Kontakte bei der Druckbelastung erfolgen.

Figur 4a zeigt den Streifen kurz vor dem Bruch in Aufsicht. Figur 4b zeigt im oberen Teil den bereits geöffneten Tunnelkontakt an den Streifen S1 und S2 mit Abstand d1. Der untere Teil zeigt im Schnitt grobschematisch den Vorgang bei Beaufschlagung mit Druck auf den Streifen S.

Die Herstellung eines Tunnelkontakts mit Streifen S1 und S2, die mit konstantem Abstand über eine Feedback-Regelung zueinander betrieben werden sollen, ist aufwändiger, da ein Aktuator als Stellglied integriert werden muss.

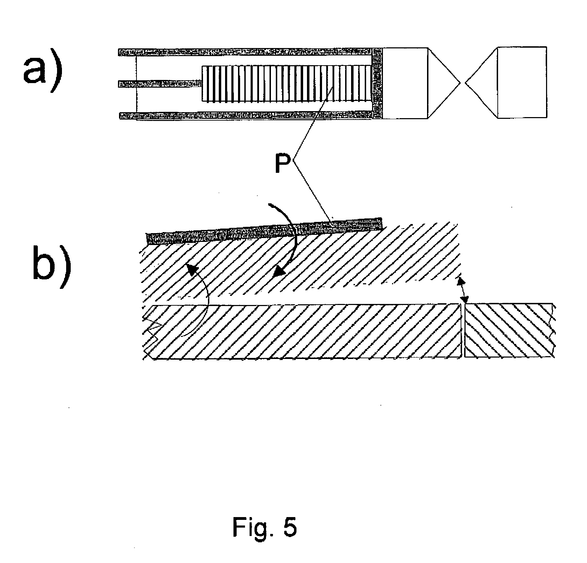

Eine Möglichkeit zum Betreiben der Sensoranordnung zeigt die Figur 5. Hier wird eine piezoelektrische Schicht P auf den langen Streifen S1 aufgebracht. Wenn sich der Streifen S1 durch eine Druckbelastung der Membran M (nicht dargestellt) tangential abhebt und der Kontaktabstand d1 auf d2 vergrößert wird, wird die piezoelektrische Schicht P mit einer Spannung beaufschlagt und dehnt sich aus. Die Herstellung von piezoelektrischen Schichten P und deren Ansteuerung ist Stand der Technik. Wegen der festen Verbindung zur Kontaktoberseite wird ähnlich wie bei einem Bimorph der Kontakt so lange nach unten gebogen, bis der Sollwert des Tunnelabstands wieder erreicht ist. Der Sollwert des Kontaktabstands wird über den sich einstellenden Tunnelstrom gemessen, der für den Arbeitspunkt z. B. 1,5 nA betragen kann. Wenn der Sollwert erreicht ist, wird die piezoelektrische Schicht nicht weiter ausgedehnt.

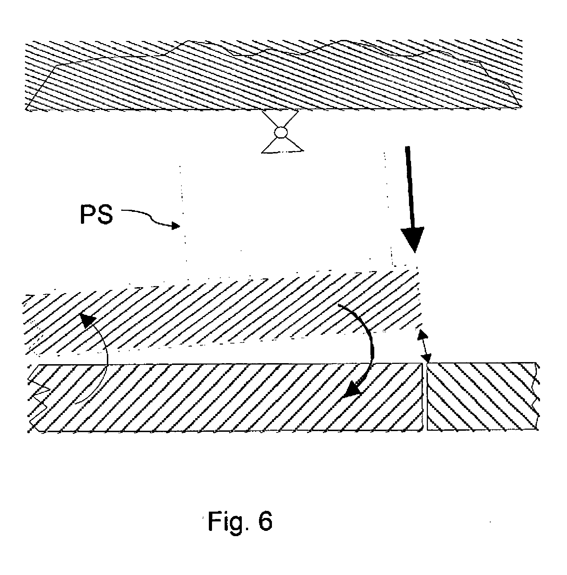

Eine andere Ausführung einer Feed-back-Regelung über ein Piezo-Element zeigt die Fig. 6. Hier werden auf dem ersten Streifen S1 piezoelektrische Schichten bzw. ein Piezokristall so angebracht, dass die Längenänderung der Schicht bzw. des Kristalls bei Ansteuerung mit einer Spannung ausreicht, um eine zusätzliche Auslenkung des Streifens über den Sollwert hinaus zurückzustellen. Bei einem piezoelektrischen Dehnungskoeffizienten von etwa $5.10^{-10}$ m/V und einer angelegten Spannung von 2 V ergibt sich eine ausreichende Längenänderung, wenn ein Abstand der Tunnelkontakte von 1 nm kompensiert werden muss. Mit einer üblichen relativen Längenänderung von 0,1 % der piezoelektrischen Schicht ergibt sich die Höhe der Schicht zu etwa 1 $\mu$m. Bei der Ausführung als Schicht können verschiedene Deponierungsverfahren, z. B. PECVD (plasma enhanced chemical vapour deposition), MOCVD (Metal-Organic Chemical Vapour Deposition) oder Sputtern verwendet werden. Die Auslegung und Herstellung solcher Schichtsysteme ist Stand der Technik.

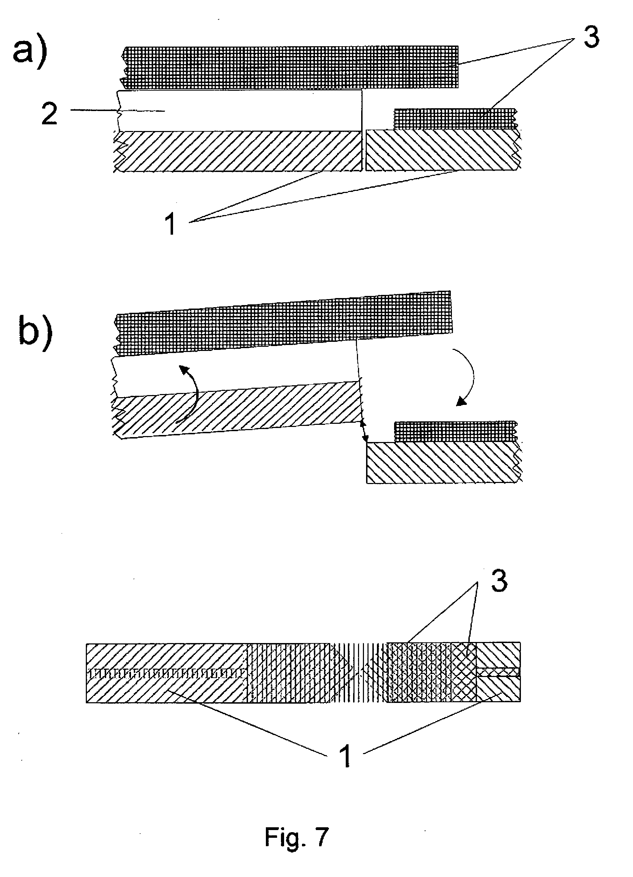

Eine Prinzipdarstellung mit einem elektrostatischen Aktuator zeigt die Figur 7. Auf dem langen Streifen S1 befindet sich eine Isolatorschicht 2, auf der eine metallische Schicht 3 angeordnet ist. Auf dem kurzen Kontakt S2 befindet sich die gleiche Schicht 3. Beide Schichten 3 bilden die Platten des elektrostatischen Aktuators. Bei einer Auslenkung des Kontakts über den Sollwert hinaus wird eine der Platten positiv geladen und die andere Platte negativ geladen. Durch die sich einstellende Rückstellkraft wird der Sollwert wieder eingestellt. Die Funktion eines elektrostatischen Aktuators ist Stand der Technik. Zur Herstellung dieser ist ein Mehrlagenprozess notwendig, der dem Fachmann aus dem Stand der Technik bekannt ist.

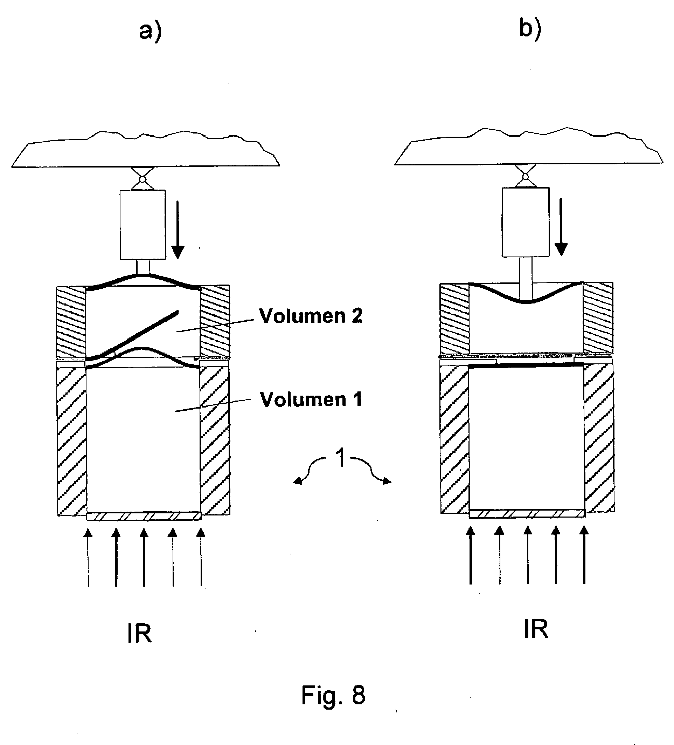

Eine weitere Möglichkeit, den Abstand zwischen den Elektroden eines Bruchkontaktes auf einen konstanten Abstand zu regeln besteht in der Etablierung eines Druckausgleiches, siehe Figur 8. Hierfür wird auf die Sensorzelle mit dem Volumen 1 eine Kompensationszelle mit dem Volumen 2 aufgebracht, z. B. durch Kleben. Die auf das Volumen 1 treffende Wärmestrahlung (Pfeile) führt zu einer Ausdehnung dieses Volumens und damit verbunden zum Anstieg des Druckes in der Kammer mit Volumen 1. Der Druckanstieg wiederum hat eine Kraft zur Folge, die ein Verbiegen der Membran M hervorruft. Das Verbiegen der Membran kann durch Anlegen eines komplementären Gegendruckes im Volumen 2 kompensiert werden. Die Kompensationszelle mit dem Volumen 2 ist ebenfalls mit einer Membran versehen, die durch ein Aktuator in den Innenbereich verbogen werden kann. Durch das Verbiegen der Membran verringert sich das Volumen 2 der Kompensationskammer und der Druck steigt an. Die Feedback-Regelung gewährleistet, dass zwischen Volumen 1 und 2 der gleiche Druck herrscht und die Verbiegung des Bruchkontaktes konstant gehalten wird.

Der geregelte Betrieb wie in den Figuren 5 bis 8 dargestellt, ist z. B. der US 5,298,748 auf der Spalte 7, Zeile 37 bis zur Spalte 8, Zeile 9 in Verbindung mit Figur 5 zu entnehmen.

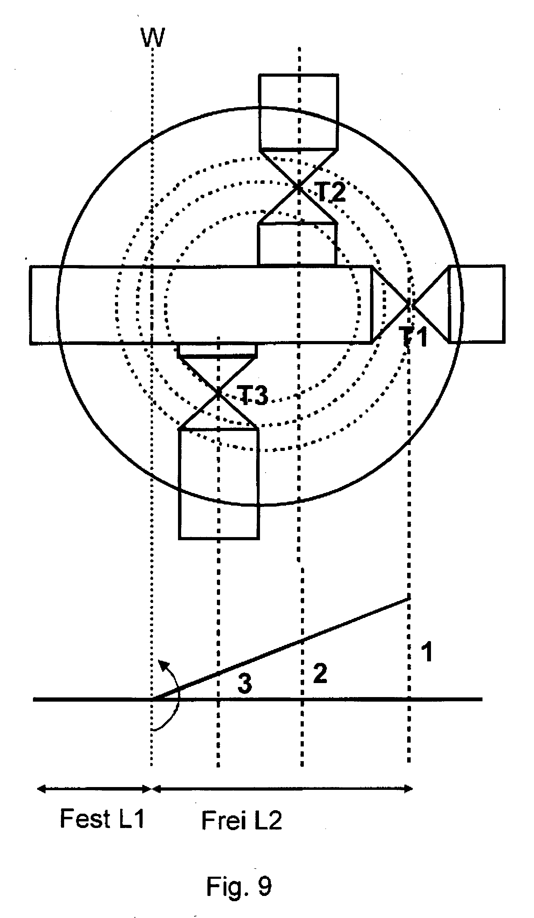

Eine weitere Ausführungsform einer erfindungsgemäßen Sensoranordnung zeigt die Figur 9. Ein Nachteil der ungeregelten Kontakte mit veränderlichem Abstand ist, dass bei einer zu starken Auslenkung kein Tunnelstrom mehr vorhanden und damit keine Sensorfunktion mehr gegeben ist. Diesen Nachteil kann man durch mehrere seitliche Tunnelkontakte T2, T3 verringern, siehe Figur 9. Durch eine Anpassung der Abstände der Kontakte um den Mittelpunkt der Membran können die Auslenkungen 1, 2, 3 so angepasst werden, dass der Arbeitsbereich vergrößert wird. W = Wendepunkt.

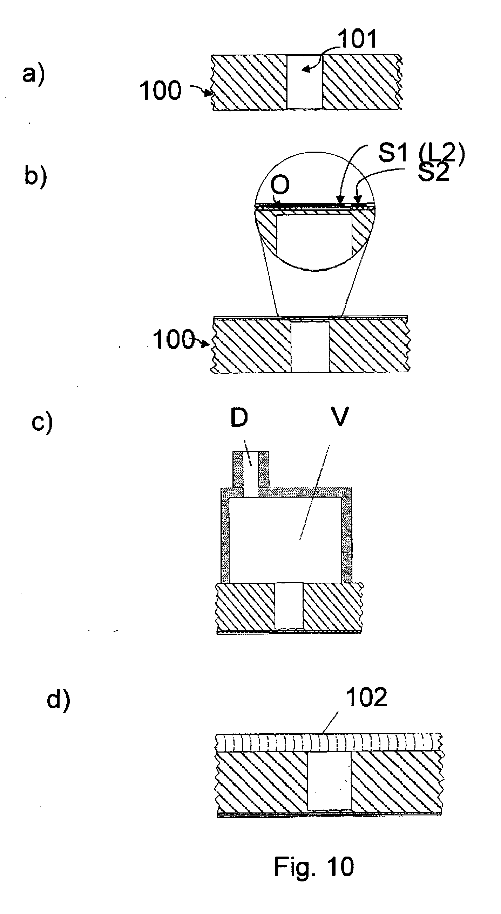

Zur Herstellung eines IR-Sensors mit planaren Tunnelkontakten kann man von den folgenden Prozessschritten ausgehen (Figur 10).

Herstellung der Zelle zur Aufnahme eines Fluids (Figur 10a)): Ausgehend von einem Siliziumwafer 100 mit einer Dicke von 0,7 mm wird auf der einen Seite durch DRIE (Deep Reactive Echting) und einem anisotropen Ätzprozess eine Zelle 101 mit einem Durchmesser von 0,5 mm geätzt. Die Tiefe der Zelle wird so gewählt, dass nur noch ein Boden als Membran mit einer Dicke von 1 $\mu$m übrigbleibt.

Herstellung der planaren Tunnelkontakte: Auf der anderen, bisher nicht bearbeiteten Seite des Wafers, siehe Fig. 10b, wird eine Opferschicht O aus z. B. Chrom mit einer Dicke von 200-300 nm durch Aufdampfen mit PVD (Physical Vapor Deposition) aufgebracht. Darauf wird eine Schicht mit einer Dicke von 1 $\mu$m aus z. B. Iridium durch PVD abgeschieden. Anschließend werden durch Lift-Off die planaren Tunnelkontakte strukturiert. Die Spitzen der Steifen, die eine möglichst geringe Verbindungsfläche (Schichthöhe x Verbindungsbreite) haben sollen, werden mit einem Elektronenstrahlschreiber strukturiert. Verbindungsbreiten von 50-100 nm sind vorteilhaft. Durch nasschemisches Ätzen wird nun die Opferschicht zwischen dem Silizium und dem Tunnelkontakt entfernt, sodass der erste Streifen S1 mit freier Länge L2 aus Iridium entsprechend der Zeigerlänge hergestellt wird. Bis hierhin sind allerdings die beiden Streifen S 1 und S2 des Kontakts noch durch eine Verbindungsfläche verbunden.

Um die Spitzen der Kontakte durch eine Kraft auseinander zu brechen, wird der Wafer in den Zellen durch einen Duck so beaufschlagt, dass sich die Membran verwölbt, siehe Fig. 10c). Durch die Verwölbung wird der Kontakt an seiner Verbindungsstelle mit einer Kraft belastet, die bei einer Steigerung bis zur Bruchkraft zum Brechen der Kontakte führt. Der notwendige Druck kann nur experimentell ermittelt werden.

Die Zellen können mit einem gasförmigen Fluid oder einer Flüssigkeit gefüllt werden. Bei einer Füllung mit einem Gas anders als Luft muss dies z. B. in einer Glove-Box oder einem entsprechend abgeschlossenem Volumen V mit einstellbarem Überdruck geschehen. Bei einer Füllung mit einer Flüssigkeit muss darauf geachtet werden, dass keine Gasblasen in der Zelle verbleiben. Hierfür sorgt ein Druckanschluss D.

Nach dem Füllen werden die Zellen durch Aufkleben eines infrarotdurchlässigen Fensters 102 verschlossen, siehe Fig. 10d).

**Patentansprüche**

1. Sensoranordnung zur Messung der durch eine Kraft hervorgerufenen Verformung einer Membran, wobei auf einer Membran (M) ein erster elektrisch kontaktierbarer Streifenkontakt (S1) und ein zweiter elektrisch kontaktierbarer Streifenkontakt (S2) in derselben Ebene zur Ausbildung eines Tunnelkontaktes angeordnet sind, von denen mindestens der erste Streifenkontakt (S1) beweglich auf der Membran (M) angeordnet ist, so dass der Abstand (d1) der beiden Streifenkontakte (S1, S2) im Bereich des Tunnelkontakts zueinander bei einer durch die Krafteinwirkung verursachten Verformung der Membran vergrößert wird, wobei der erste Streifenkontakt (S1) einen beweglichen an der Membran unbefestigten Abschnitt mit einer freien Länge (L2) und einen an der Membran (M) befestigten Abschnitt mit einer Länge (L1) aufweist bei der die freie Länge (L2) größer ist als die befestigte Länge (L1).

2. Sensoranordnung nach vorherigem Anspruch,
   **dadurch gekennzeichnet, dass**
   der erste Streifenkontakt (S1) länger ist als der zweite Streifenkontakt (S2).

3. Mit einem Fluid (F) gefüllte Messkammer, mit einer Sensoranordnung nach einem der vorhergehenden Ansprüche.

4. Messkammer (1) nach vorherigem Anspruch,
   wobei die Membran (M) eine flexible Membran als Teil der Wand der Messkammer ausbildet.

5. Messkammer nach vorherigem Anspruch,
   **gekennzeichnet durch**
   ein für elektromagnetische Strahlung transparentes Fenster (2) in der Wand der Messkammer (1).

6. Verfahren zum Betreiben einer Sensoranordnung oder einer Messkammer nach einem der vorhergehenden Ansprüche,
   bei der
   im ungeregelten Betrieb die durch die Krafteinwirkung hervorgerufene Änderung des Abstands und Tunnelstroms direkt als Maß für die Verformung der Membran (M) gemessen wird.

7. Verfahren zum Betreiben einer Sensoranordnung oder einer Messkammer nach einem der vorhergehenden Ansprüche,
   bei der
   im geregelten Betrieb eine Feed-Back-Regelung eingesetzt wird, bei der eine elektronische Schaltung ein Rückstell-Element ansteuert und so der Kontaktabstand bzw. der Tunnelstrom konstant gehalten wird und das Rückstellsignal der Feed-Back-Regelung als Maß für die Verformung der Membran (M) registriert wird.

**Claims**

1. Sensor arrangement for measuring the deformation of a membrane caused by a force, wherein a first electrically contactable strip contact (S1) and a second electrically contactable strip contact (S2) are arranged in the same plane on a membrane (M) so as to form a tunnel contact, and at least the first (S1) of the two strip contacts is arranged movably on the membrane (M) so that the distance (d1) between the two strip contacts (S1,S2) in the region of the tunnel contact is increased upon deformation of the membrane under the action of a force, the first strip contact (S1) having a movable portion with a free length (L2) unattached to the membrane and a portion with a length (L1) attached to the membrane (M), the free length (L2) being greater than the attached length (L1).

2. Sensor arrangement according to the preceding claim,
   **characterized in that**
   the first strip contact (S1) is longer than the second strip contact (S2).

3. Measuring chamber filled with fluid (F), with a sensor arrangement according to either of the preceding claims.

**4.** Measuring chamber (1) according to the preceding claim,
wherein the membrane (M) forms a flexible membrane as part of the wall of the measuring chamber.

**5.** Measuring chamber according to the preceding claim,
**characterised by**
a window (2) transparent to electromagnetic radiation in the wall of the measuring chamber (1).

**6.** Method of operation of a sensor arrangement or measuring chamber according to any one of the preceding claims,
wherein
in non-regulated mode, the variation in the distance and tunnel current under the action of force is measured directly as a measure of the deformation of the membrane (M).

**7.** Method of operation of a sensor arrangement or measuring chamber according to any one of the preceding claims,
wherein
in regulated mode, a feedback regulation is used, in which an electronic circuit drives a restoring element thus keeping the contact gap and the tunnel current constant, and the restoration signal of the feedback regulation is recorded as a measure of the deformation of the membrane (M).

**Revendications**

**1.** Ensemble capteur servant à mesurer la déformation d'une membrane provoquée par une force, sachant qu'un premier contact en forme de bande (S1) pouvant être mis en contact électriquement et un deuxième contact en forme de bande (S2) pouvant être mis en contact électriquement sont disposés sur une membrane (M), dans le même plan afin de réaliser une jonction à effet tunnel, parmi lesquels au moins le premier contact en forme de bande (S1) est disposé de manière mobile sur la membrane (M) de manière à agrandir la distance (d1) entre les deux contacts en forme de bande (S1, S2) dans la zone de la jonction à effet tunnel en présence d'une déformation de la membrane provoquée sous l'action d'une force, sachant que le premier contact sous forme de bande (S1) présente une section mobile non fixée au niveau de la membrane présentant une longueur libre (L2) et une section fixée au niveau de la membrane présentant une certaine longueur (L1), la longueur libre (L2) étant supérieure à la longueur fixée (L1).

**2.** Ensemble capteur selon la revendication précédente,
**caractérisé en ce que**
le premier contact en forme de bande (S1) est plus long que le deuxième contact en forme de bande (S2).

**3.** Chambre de mesure remplie d'un fluide (F), comprenant un ensemble capteur selon l'une quelconque des revendications précédentes.

**4.** Chambre de mesure (1) selon la revendication précédente,
sachant que la membrane (M) constitue une membrane flexible faisant partie d'une paroi de la chambre de mesure.

**5.** Chambre de mesure selon la revendication précédente,
**caractérisée par**
une fenêtre (2) transparente pour un rayonnement électromagnétique, réalisée dans la paroi de la chambre de mesure (1).

**6.** Procédé servant à faire fonctionner un ensemble capteur ou une chambre de mesure selon l'une quelconque des revendications précédentes,
dans le cadre duquel
la variation de la distance et du courant tunnel, provoquée par l'action d'une force, est mesurée, lors du fonctionnement non régulé, directement comme mesure de la déformation de la membrane (M).

**7.** Procédé servant à faire fonctionner un ensemble capteur ou une chambre de mesure selon l'une quelconque des revendications précédentes,
dans le cadre duquel
on utilise lors du fonctionnement régulé un réglage de rétroaction, dans le cadre duquel une commutation électronique commande un élément de remise à l'état initial et la distance de contact ou le courant tunnel est ainsi maintenu(e) de manière constante et le signal de remise à l'état initial du réglage de rétroaction est enregistré comme mesure de la déformation de la membrane (M).

Fig. 1

W

T1

M

S1

Höhe:
0,1 mm

S2

Fest L1
(0,145 mm)

Frei L2

S1 (L1 plus L2 ca. 0,5 mm)

Fig. 2

Fig. 3

Fig. 4

a)

b)

P

Fig. 5

Fig. 6

a)

2

3

1

b)

3

1

Fig. 7

a)

b)

Volumen 2

Volumen 1

1

IR

IR

Fig. 8

Fig. 9

a)

100

101

b)

S1 (L2)
S2
O

100

c)

D    V

d)

102

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008018504
- EP 2060891 A
- US 5298748 A

**In der Beschreibung aufgeführte Nicht-Patentliteratur**

- **KENNY, TW.** Micromachined Infrared Sensors Using Tunneling Displacement Transducers. *Rev. Sci. Instrum.,* 1996, vol. 67 (1), 112-128